Europäisches Patentamt

European Patent Office

Office européen des brevets

(11) Veröffentlichungsnummer: **0 355 808 B1**

(12) **EUROPÄISCHE PATENTSCHRIFT**

(45) Veröffentlichungstag der Patentschrift: **23.02.94**

(21) Anmeldenummer: **89115553.3**

(22) Anmeldetag: **23.08.89**

(51) Int. Cl.⁵: **C08K 9/04**

(54) Beschichteter Mineralfüllstoff oder beschichtetes mineralisches Flammschutzmittel.

(30) Priorität: **24.08.88 DE 3828737**

(43) Veröffentlichungstag der Anmeldung:
**28.02.90 Patentblatt 90/09**

(45) Bekanntmachung des Hinweises auf die
Patenterteilung:
**23.02.94 Patentblatt 94/08**

(84) Benannte Vertragsstaaten:
**AT BE CH DE ES FR GB GR IT LI LU NL SE**

(56) Entgegenhaltungen:
**DE-A- 1 542 058**
**US-A- 3 803 065**

(73) Patentinhaber: **Plüss-Staufer AG**

**CH-4665 Oftringen(CH)**

(72) Erfinder: **Schlumpf, Hans-Peter, Dr.**
**Bergliweg**
**CH-4665 Oftringen(CH)**
Erfinder: **Haldemann, Peter**
**Brunnhaldenweg 30**
**CH-4852 Rothrist(CH)**

(74) Vertreter: **Reinhard, Skuhra, Weise**
**Postfach 44 01 51**
**D-80750 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft beschichtete Mineralfüllstoffe oder beschichtete mineralische Flammschutzmittel.

Mineralfüllstoffe wie Calciumcarbonat, Talk, Glimmer, Wollastonit, Silica, Kaolin, Dolomit und ähnliche Produkte werden in großen Mengen in der Polymerindustrie als Extender und Verstärker eingesetzt. Die natürlichen gemahlenen Calciumcarbonate sind dabei führend bei PVC, ungesättigten Polyestern und bei Latexanwendungen (Teppichrückenbeschichtungen). Im Bereich der Polyolefine (Polyethylen (PE) und Polypropylen (PP) bzw. ihrer Copolymeren) ist natürliches Calciumcarbonat der zweitwichtigste Füllstoff hinter Talk.

Für Massenpolymere wie PE und PP sucht man vermehrt nach halogenfreien Flammschutzmitten wie Aluminiumtrihydrat, Magnesiumhydroxid oder hydratisierten Magnesiumcarbonaten, welche sich bei hohen Füllgraden bis 70 Gew.% einwandfrei redispergieren lassen.

Die heutigen Massenpolymere PE, PP und Polystyrol (PS) werden in der überwiegenden Mehrzah der Fälle als Granulat eingesetzt. Dies zwingt die Mineralfüllstoffhersteller, ihre pulverförmigen Mineralien zuerst durch ein teures Compoundier- oder Masterbatchherstellverfahren auch in eine granulatförmige homogene Mischung zwischen Füllstoff und Polymermatrix überzuführen siehe hierzu z.B. "Aufbereiten von Polyolefinen", Kapitel "Compoundieren und Granulieren", VDI-Verlag GmbH, Düsseldorf 1984, S. 185, 313).

Um optimale Eigenschaften zu erhalten, und um die Grenzflächenspannungen zwischen den unpolaren Polymeren (PE, PP, PS) und den polaren Mineralien zu reduzieren, werden die Mineralfüllstoffe oft mit sogenannten Oberflächenbeschichtungsmitteln beschichtet. Ein ideales Oberflächenbeschichtungsmittel sollte dem Mineralfüllstoff folgende Eigenschaften geben:
-   Erreichung eines maximalen Füllgrades mit möglichst wenig Polymerträger,
-   kürzeste Zeit zur Erreichung einer homogenen Schmelze,
-   hohe Fließfähigkeit der Schmelze (hoher Schmelzindex),
-   schnelle und maximale Redispergierung des Füllstoff-Compounds oder -Masterbatches in reinem Polymeren beim letzten Verarbeitungsschritt (Extrusion, Spritzguß, Hohlkörperblasen),
-   Lebensmittelechtheit (BGA und FDA), damit die oberflächenbeschichteten Füllstoffe auch in Polymerteilen eingesetzt werden können, welche mit Lebensmitteln in Berührung kommen (Verpackungsfolien, Tragtaschen, Margarine-und Joghurtbecher etc.).

Es sind bereits sehr viele Möglichkeiten zur Oberflächenbeschichtung von Calciumcarbonaten und ähnlichen Mineralfüllstoffen, Mineralpigmenten oder mineralischen Flammschutzmitten entwickelt worden. Dies betrifft z.B. DE-PS 958 830, worin Fettsäuren, Aminofettsäuren und Fettalkohole angemeldet werden. In DE-AS 2 228 200 benützt man Fettaminsalze. DE-OS 23 47 423 weist gesättigte oder ungesättigte Fettsäuren, Ester aromatischer Säuren, Aminosäuren und deren Salze, Estermischungen verschiedener Fettsäuren und Phosphorsäureester aus. DE-OS 36 90 042 (WO 86/04598) schlägt für Calciumcarbonat Diamine plus Carboxylsäuren plus Fettsäuren als Beschichtungsmittel vor.

Auch Metallsaize (meist Erdalkalimetall- oder Zinksalze) von gesättigten und ungesättigten Fettsäuren sind als Oberflächenbeschichtungsmittels für Calciumcarbonat und andere Mineralien bereits bekannt. Dies betrifft speziell JP A 61 97,363 worin geschmolzenes Calciumstearat eingesetzt wird. Für die Einarbeitung von Kreide in PVC-weich sind aus Patent PL A 109,003 Calciumstearat in Kombination mit Blei- oder Cadmiumstearat als Füllstoffbeschichtung bekannt. In JP A 78,142,455 werden Zink-plus Magnesiumstearate als Beschichtungsmittel auf Calciumcarbonat für den Einsatz in PP beschrieben.

Eine Problematik der obenerwähnten bekannten Oberflächenbeschichtungsmittel für Mineralien wie z.B. Calciumcarbonat liegt darin, daß die Oberflächenspannung des Oberflächenbeschichtungsmittels für die mineralischen Additive an die Oberflächenspannung der Polymere, in welche die Mineralien eingearbeitet werden sollen, nicht angepaßt ist.

Die wichtigsten Massenpolymere besitzen die folgenden Oberflächenspannungen (U. Zorll: Gummi-Asbest-Kunststoffe 29 (1976) 11, S. 746; A. Casarini: Industria Vernice 31 (1977) 4, S. 2/29):

| | |
|---|---|
| - PE | 31,0 mN/m |
| - PP | 30,0 mN/m |
| - PS | 33,0 mN/m |
| -PVC | 39,0 mN/m |

Die wichtigsten mineralischen Füllstoffe und pigmente haben demgegenüber wesentlich höhere Oberflächenspannungen (O. Huber, J. Weigl: Das Papier 26 (1972) S. 545).

| - Kaolin | 508 - 668 mN/m |
|---|---|
| - TiO$_2$ | 640 mN/m |
| - Calciumcarbonat | 78 mN/m |
| - Talkum | 68 mN/m |
| - Quarzpulver | 780 mN/m |

In der DE-OS 31 02 657 sind Pigment-Zubereitungen beschrieben, wobei das Pigment in einem schmelzbaren Träger, welcher u.a. Stearylamid und bis 5 % an Metallseifen enthalten kann, feinst dispergiert ist. Im Gegensatz dazu wird erfindungsgemäß der Mineralfüllstoff oder das mineralische Flammschutzmittel nicht in einem Trägersystem eingebettet, sondern mit dem erfindungsgemäßen Gemisch beschichtet.

In der DE-AS 15 42 058 wird ein Verfahren zur Granulierung von Verarbeitungshilfsmitten bzw. von Zusatzstoffen für Kunststoffe beschrieben. Es wird aber nicht nahegelegt Mineralfüllstoffe bzw. Flammschutzmittel mit dem erfindungsgemäßen Gemisch zu beschichten.

Eine Aufgabe der vorliegenden Erfindung ist es, einen beschichteten Mineralfüllstoff oder ein beschichtetes mineralisches Flammschutzmittel bereitzustellen, welche die oben genannten Nachteile vermeidet.

Diese Aufgabe wird erfindungsgemäß dadurch gelöst, daß der beschichtete mineralische Füllstoff bzw. das beschichtete mineralische Flammschutzmittel aus 97,0 - 99,9 Gew.-% Mineralfüllstoff bzw. Flammschutzmittel und 3,0 - 0,1 Gew.-% Beschichtungsmittel, zusammengesetzt aus einem Gemisch aus 10 - 90 Gew.-% eines Fettsäuresalzes der Erdalkalimetalle und/oder der Schwermetalle, insbesondere des Zinks und 90 - 10 Gew.-% eines Fettsäureamides, besteht.

Vorteilhaft werden als Fettsäuresalze Erdalkalimetall- und/oder Zinksalze der Fettsäuren verwendet.

Als Fettsäuresalze werden vorteilhaft Ca- und/oder Mg- und/oder Zn-salze verwendet.

Die Fettsäure des Fettsäuresaizes kann erfindungsgemäß gesättigt oder ungesättigt sein und soll vorteilhaft 12 - 18 C-Atome aufweisen.

Ganz besonders gute Ergebnisse werden erzielt, wenn ein Salz der Stearinsäure verwendet wird. Analoges gilt für ein Salz der Palmitinsäure.

Als Fettsäureamid können erfindungsgemäß vorteilhaft Stearinsäureamid und/oder Ölsäureamid und/oder Erucasäureamid und/oder Behensäureamid verwendet werden.

Vorteilhaft ist es, wenn im Gewichtsverhältnis zwischen Fettsäuresalzen und Fettsäureamiden nicht weniger als 30 Gew.% Fettsäureamide enthalten sind.

Der beschichtete Mineralfüllstoffe bzw. das beschichtete mineralische Flammschutzmittel bestehen bevorzugt aus 97,5 - 99,5 Gew.-% Mineralfüllstoff bzw. Flammschutzmittel und 2,5 - 0,5 Gew.-% Beschichtungsmittel. Weiterhin bevorzugt ist es, wenn er bzw. es aus 98,0 - 99,0 Gew.-% Mineralfüllstoff bzw. Flammschutzmittel und 2,0 - 1,0 Gew.-% Beschichtungsmittel besteht. Insbesondere bevorzugt besteht er bzw. es aus 98,3 - 98,7 Gew.-% Mineralfüllstoff bzw. Flammschutzmittel und 1,7 - 1,3 Gew.-% Beschichtungsmittel. Insbesondere bevorzugt ist ein beschichteter Mineralfüllstoff oder ein beschichtetes mineralisches Flammschutzmittel, welcher bzw. welches aus 99 Gew.-% bzw. 99,5 Gew.-% bzw. 99,3 Gew.% bzw. 99,7 Gew.-% Mineralfüllstoff bzw. Flammschutzmittels und 1 Gew.-% bzw. 0,5 Gew.-% bzw. 0,7 Gew.% bzw. 0,3 Gew.-% Beschichtungsmittel besteht.

Das erfindungsgemäße Beschichtungsmittel besteht bevorzugt aus 10 - 70 Gew.-% eines Fettsäuresalzes und 90 - 30 Gew.-% eines Fettsäureamides. Weiterhin bevorzugt ist ein Beschichtungsmittel aus 20 - 60 Gew.-% eines Fettsäuresaizes und 80 - 40 Gew.-% eines Fettsäureamides. Insbesondere bevorzugt wird ein Beschichtungsmittel aus 30 - 50 Gew.-% eines Fettsäuresaizes und 70 - 50 Gew.-% eines Fettsäureamides.

Ganz besonders bevorzugte Beschichtungsmittel bestehen aus 65 Gew.-% Fettsäuresalz und 35 Gew.-% Fettsäureamid, 60 Gew.-% Fettsäuresalz und 40 Gew.-% Fettsäureamid und 55 Gew.-% Fettsäuresalz und 45 Gew.-% Fettsäureamid.

Hervorragende Ergebnisse lassen sich erzielen, wenn 50 Gew.-% Fettsäuresalz und 50 Gew.-% Fettsäureamid eingesetzt werden. Dies gilt besonders für Mg-Stearat und Stearinsäureamid und/oder Erucasäureamid, insbesondere bei 50 Gew.-% Mg-Stearat und 50 Gew.-% Stearinsäureamid und/oder Erucasäureamid.

Ein Beispiele für eine besonders günstige erfindungsgemäße Dreierkombination bildet ein Gemisch aus Mg-Stearat, Zn-Stearat und Stearinsäureamid oder Erucasäureamid, insbesondere im Gewichtsverhältnis 1:1:1.

Die erfindungsgemäß beschichteten Mineralfüllstoffe können besonders vorteilhaft in unpolaren Polymeren, besonders vorteilhaft in Polyolefinen und ganz besonders bevorzugt in Polyethylen (PE) und/oder Polypropylen (PP) und/oder ihren Copolymeren eingesetzt werden.

Mineralfüllstoffe, die sich besonders gut zur Beschichtung mit dem erfindungsgemäßen Beschichtungsmittel eignen, sind Calciumcarbonat und/oder Calciumsulfat und/oder Talkum und/oder Glimmer und/oder Wollastonit.

Mineralische Flammschutzmittel, die besonders vorteilhaft zur Beschichtung mit dem erfindungsgemäßen Beschichtungsmittel geeignet sind, sind Aluminiumtrihydrat und/oder carbonatische bzw. hydroxidische Magnesiumverbindungen wie Dolomit und/oder Magnesiumcarbonat und/oder teilhydratisiertes Magnesiumcarbonat (Huntit) und/oder Magnesiumhydroxid.

Die erfindungsgemäß beschichteten mineralischen Flammschutzmittel können vorteilhaft in Polyolefinen, insbesondere in Polyethylenen (PE) und/oder Polypropylen (PP) und/oder in ihren Copolymeren oder in Polystyrol eingesetzt werden.

Es wurde erfindungsgemäß überraschend gefunden, daß Oberflächenbeschichtungsmittel oder deren Gemische, welche eine Oberflächenspannung in der Nähe der Oberflächenspannung der Massenpolymere (PE, PP, PS) besitzen, eine wesentliche Verbesserung der Eigenschaften von Mineralien in diesen Polymeren bringen. Dies betrifft speziell die technisch wichtigen Eigenschaften:
- Erreichung eines sehr hohen Füllgrades bei Füllstoff oder Pigmentmasterbatches,
- Verkürzung der Einarbeitungszeit der Mineralien in den Polymerträger bei der Herstellung von hochgefüllten Masterbatches (höherer Ausstoß),
- hohe Fließfähigkeit (hoher Schmelzindex nach DIN 53 735) des Masterbatches,
- schnelle und optimale Dispergierung des Mineralien-Compounds oder -Masterbatches in reinen Polymeren.

Oberflächenspannungsmessungen bei 95°C mit der Wilhelmy-Plattenmethode ergaben für Kombinationen aus Fettsäuresalzen und Fettsäureamiden folgende Werte:

| - Mg-Stearat / Stearinsäureamid 1:1 | 31,7 mN/m |
| - Mg-Stearat / Zn- Stearat / Stearinsäureamid 1/3:1/3:1/3 | 30,7 mN/m |

Die als Oberflächenbeschichtung für Calciumcarbonate bisher vorwiegend eingesetzte Stearinsäure besitzt demgegenüber eine Oberflächenspannung bei 95°C von 67,5 mN/m. Dieser Wert liegt sehr nahe bei der Oberflächenspannung des Calciumcarbonates. Dadurch findet bei einer Stearinsäurebeschichtung keine optimale Anpassung an die Oberflächenspannung der Polymere (PE, PP, PS) statt, und die obenerwähnten wünschenswerten Vorteile einer guten Mineraladditivbeschichtung sind damit nicht erzielbar.

Das erfindungsgemäße Beschichtungsmittel kann vom Fachmann ohne weiteres hergestellt werden. Insbesondere kommen folgende vier Herstellungsarten in Betracht:

a. ) Zusammenschmelzen der beiden Komponenten (Fettsäuresalz und Fettsäureamid) über der Schmelztemperatur der gewählten Mischung. Diese Schmelztemperatur beträgt z.B. für die Mischung aus je 50 Gew.% Mg-Stearat und Stearinsäureamid 75°C und für die ternäre Mischung aus je 1/3 Mg-Stearat/Zink-Stearat und Stearinsäureamid 70°C.

b. ) Trockenes Zusammenmischen der pulverförmigen Beschichtungsmittel vor der Durchführung der Oberflächenbeschichtung.

c. Lösen des Gemisches von Fettsäuresalz mit Fettsäureamid in geeigneten Lösungsmitten wie Aromaten (Benzol Toluol).

d. ) Lösen der Einzeikomponenten je in einem für beide Komponenten löslichen Lösungsmittel und Zusammenrühren der beiden Lösungen.

Die Beschichtung von Mineralfüllstoffen oder von mineralischen Flammschutzmitten mit dem erfindungsgemäßen Beschichtungsmittel kann vom Fachmann ohne weiteres durchgeführt werden. Insbesondere kommen folgende drei Beschichtungsverfahren in Betracht:

a. ) Das nach den vier obigen Mischverfahren hergestellte Gemisch wird in einem Schnellmischer
- fest
- flüssig (aufgeschmolzen)
- gelöst
auf den Mineralfüllstoff aufgesprüht. Dieser soll vorher auf eine Temperatur oberhalb der Schmelztemperatur des Beschichtungsmittelgemisches erhitzt werden. Lösungsmittel werden anschließend abgedampft.

b. ) Das Beschichtungsmittelgemisch wird wie unter a. ) dem erwärmten Füllstoff in einer Mühle (z.B. Stiftmühle oder Kugelmühle) zugegeben und der Füllstoff so beschichtet.

EP 0 355 808 B1

c. ) Mit dem erwärmten Füllstoff wird ein Fließbett erzeugt und das Beschichtungsmittelgemisch flüssig (geschmolzen oder gelöst) eingedüst und so beschichtet.

Weitere Merkmale und Vorteile der Erfindung ergeben sich aus der folgenden Beschreibung von Ausführungsbeispielen. Die Wirksamkeit der erfindungsgemäßen Gemische wird ebenfalls durch die folgenden Beispiele belegt:

## 1. Beispiel

Die Güte einer Oberflächenbeschichtung für Mineralien für den Einsatz in Polymeren kann sehr gut an der Höhe des Füllgrades abgeschätzt werden, welcher in einem Füllstoff/Polymer-Masterbatch mögiich ist. Je höher der Füllgrad und je höher die Fließfähigkeit sind, um so besser ist die Mineralienoberfläche an das Polymermaterial angepaßt. Im Patent BE-OS 904 762 wird dargelegt, daß das System 88 Gew.% natürliches, gemahlenes Calciumcarbonat I, 11,0 - 11,2 Gew.% niedermolekulares Polyolefin-Terpolymer I und 0,8% - 1,0 Gew.% Dispergator (Monoester der Ortho-Phosphorsäure) einem neuen Stand der Technik für höchstgefüllte Füllstoff/Polyolefin-Masterbatches entspreche, welcher bis dahin nicht erzielbar gewesen sei.

Das verwendete gemahlene Caiciumcarbonat I urgonischen Ursprungs besitzt einen mittleren statistischen Teilchendurchmesser von 3,0 $\mu$m. Der Rückstand auf dem 40 $\mu$m Sieb beträgt 0,1 Gew.%. 30 der Teilchen sind feiner als 2,0 $\mu$m. Die mit Stickstoff gemessene BET-Oberfläche beträgt 2,2 m$^2$/g.

Das eingesetzte Terpolymer I aus Alpha-Olefinen besteht vorwiegend aus Buten. Der Rest ist Ethylen und Propen. Das Polymer ist amorph und wird im Niederdruckverfahren hergestellt. Die Schmelzviskosität im Rotationsviskosimeter beträgt 8'000 mPa.s 190°C) und der Erweichungspunkt Ring und Kugel ca. 85°C (DIN 52011). Die Penetration 100/25/5 in Anlehnung an DIN 52 010 (0,1 mm) beträgt ca. 15. Der Brechpunkt nach Fraas nach DIN 52 012 liegt bei ca. -30°C. Der Masseverlust nach 2 h bei 180°C unter Stickstoff liegt unter 1 Gew.%.

Um die Effizienz der erfindungsgemäßen Beschichtungsmittelkombinationen zu prüfen, wählte man die gleichen Ausgangsmineralien und Rezepturen wie in BE-OS 904 762. Alle weiteren Prozentangaben sind dabei immer Gewichts-Prozente.

Die Vorbeschichtung des Calciumcarbonat-Füllstoffes Typ I erfolgte in einem 2 l-Labor-Intensivmischer der Firma MTI, Lage/BRD. Der Füllstoffe wurde im Mischer durch Friktion bei 4'000 Upm auf 20°C über die Schmelztemperatur der entsprechenden Oberflächenbeschichtungsmittel aufgeheizt, dann das flüssig gemachte Beschichtungsmittel zugetropft und weitere 10 min bei 4'000 Upm gemischt, um eine homogene Bedeckung der Füllstoffoberfläche zu erzielen.

Als Polymerträger verwendete man das gleiche Terpolymer I wie in BE-OS 904,762.

Die Herstellung der höchstgefüllten Masterbatches aus Calciumcarbonat I und Terpolymer I erfolgte in einer 1 l-Universal Misch- und Knetmaschine der Firma Werner + Pfleiderer AG, Stuttgart/BRD. Die Knetmaschine besitzt zwei Z-förmige, gegeneinander arbeitende Knetschaufeln welche eine Geschwindigkeit von 63 Upm besitzen. Damit kann die Arbeitsweise einer modernen Polymer-Compoundier- oder Masterbatch-Maschine (z.B. Innenmischer Typ Banbury, Zweiwellen-Compoundierextruder mit Knetscheiben Typ ZSK von Werner + Pfleiderer AG) sehr gut simuliert werden.

Die Zusammensetzung des hochgefüllten Masterbatches wählte man wie in BE-OS 904,762.

Total 400 g Material bestehend aus 88,0 Gew.% Calciumcarbonat I beschichtet mit 1,0 Gew.% Oberflächenbeschichtungsmittel bezogen auf CaCO$_3$ und 11,12 Gew.% Terpolymer I knetete man im Laborkneter bis eine homogene, kittartige Masse ohne restliche Füllstoffagglomerate entstand. Die Doppelwand des Kneters wurde dabei auf 195°C geheizt, so daß die Massetemperatur immer 135°C betrug. Die Homogenität des hergestellten Masterbatches überprüfte man optisch durch Verpressen einer kleinen Menge zwischen zwei Objektträgern aus Glas.

Die Güte der hergestellten Masterbatches wurde noch nach den Kriterien beurteilt:
- Einarbeitungszeit bis zur Erreichung einer agglomeratfreien Schmelze,
- Fließfähigkeit des Masterbatches gemessen mit der Schmelzindex-Methode (MFI) nach DIN 53 735 mit den auf das Terpolymer I bezogenen Temperatur- und Druckbedingungen von 150°C und 10 kg.

Tabelle I zeigt die erhaltenen Daten aufgeteilt in den Stand der Technik und in erfindungsgemäße Beschichtungsmittelkombinationen aus Metallsalzen der Fettsäuren und Fettsäureamiden. Die 3. Spalte gibt die im MTI-Mischer gewählte Beschichtungstemperatur des Füllstoffes an. In der 4. Spalte sind die Einarbeitungszeiten bis zur Erreichung einer homogenen Schmelze aufgeführt. Die erfindungsgemäßen Kombinationen ergeben - dank der Anpassung der Oberflächenspannungen zwischen Füllstoff und Polymer - eine vorteilhafte Verkürzung der Einarbeitungszeit. Spalte 5 zeigt dies auf andere Weise mit dem Schmelzindex (MF); je höher er ausfällt, desto besser ist die Fließfähigkeit. Auch hier sind die erfindungs-

5

gemäßen Kombinationen mindestens so gut wie der Stand der Technik.

2. Beispiel

Eine weitere Möglichkeit, die Güte einer Oberflächenbeschichtung auf mineralischen Additiven zu demonstrieren, ist die Viskosität und Rheologie der gefüllten Polymerschmelze. Je niedriger die Viskosität bei gegebenem Füllgrad und Temperatur in einem Polymersystem ausfällt, desto besser ist die Verarbeitbarkeit zum Beispiel beim Spritzgießen.

Als Füllstoff/Polymersystem wählte man das in Beispiele 1 angegebene System aus 88 % Calciumcarbonat I, 1 % Beschichtungsmittel und 11,12 % Terpolymer I. Die Viskositätsmessung erfolgte mit einem Kugel/Platte Viskosimeter CP 400, Meßsystem CP 7 der Fa. Contraves AG, Zürich/Schweiz. Die Meßtemperatur betrug immer 190°C.

Tabelle 2 zeigt die Rheologie (Abhängigkeit der Schmelzviskosität von der Schergeschwindigkeit) mit Oberflächenbeschichtungsmitteln nach dem Stand der Technik und mit erfindungsgemäßen Beschichtungsmittelkombinationen. Mit den erfindungsgemäßen erzielt man nach den Spalten 3 bis 5 tiefere Viskositäten als dem Stand der Technik entsprechend. Zudem verläuft die Viskositätskurve in Abhängigkeit der Schergeschwindigkeit flacher. Dies führt speziell bei niedrigen Schergeschwindigkeiten zu geringerer Agglomeratbildung der mineralischen Additive beim Spritzgießen, Extrudieren oder Hohlkörperblasen (Schlierenbildung).

3. Beispiel

Die Güte der Redispergierung eines oberflächenbeschichteten Füllstoffes oder Flammschutzmittels bestimmt weitgehend die Verarbeitbarkeit und Qualität der Fertigteile (Spritzgußartikel, Film-und Profilextrusion, Hohlkörperblasen). Eine schlechte Füllstoffdispergierung führt zu Agglomeraten, welche sich als Schlieren an der Fertigteiloberfläche zeigen.

Die Redispergierung des mit den erfindungsgemäßen Beschichtungsmittel versehenen Calciumcarbonat I führte man mit einenm Extrusiometer der Firma Göttfert Werkstoffprüfmaschinen GmbH, Buchen/BRD durch. Die dazu verwendete Extruderschnecke besitzt ein Längen- zu Durchmesserverhältnis (L/D) von 25 und ein Gangtiefenverhältnis von 1:2. Von der Antriebseite her gesehen war nach einer Länge von 7mal dem Schneckendurchmesser ein Dispergierteil eingebaut, dessen Länge das 2,6-fache des Schneckendurchmessers betrug. Der Dispergierteil besteht aus 9 Reihen à 6 schwalbenschwanzförmigen Dispergierelementen.

Die Dispergierprüfung erfolgte mittels einer direkten Abmischung von 20 % oberflächenbeschichtetem Calciumcarbonat I und 80 % granulatförmigen HDPE. Das verwendete HDPE besitzt bei 23°C eine Dichte von 0,955 bis 0,959 und eine Viskositätszahl (reduzierte spezifische Viskosität) von 150. Der Schmelzindex bei 190°C und 2,16 kg beträgt 8. Die Massetemperatur betrug stets 175°C und die Schneckendrehzahl 40 und 20 Upm. Der pulverförmige Füllstoff ist um so schwieriger direkt in die HDPE-Schmelze einzuarbeiten, je niedriger die Schneckendrehzahl gewählt wird. Das aus der Flachdüse austretende Extrudat verpreßte man auf eine Stärke von 0,1 mm und qualifizierte die Dispergierung des Calciumcarbonats I nach 4 Qualitätsstufen:
- sehr gut: einwandfreie Dispergierung, keine Agglomerate sichtbar,
- gut: gut Dispergierung mit maximal 2 kleinen Agglomeraten kleiner als 0,1 mm pro cm$^2$ sichtbar,
- mittel: mehr als 2 und größere Agglomerate pro cm$^2$ sichtbar,
- schlecht: viele und große Füllstoffeagglomerate, keine Füllstoffdispergierung möglich.

Tabelle 3 zeigt die nach dem Stand der Technik und die mit den erfindungsgemäßen Beschichtungsmittel erzielbaren Dispergierqualitäten bei den Schneckenumdrehungszahlen 40 Upm (Spalte 3) und 20 Upm Spalte 4). Speziell die sehr niedrige Umdrehungsgeschwindigkeit von 20 Upm differenziert sehr stark und beweist klar die Effizienz der erfindungsgemäßen Beschichtungsmittelkombinationen.

Zusammenfassend kann gesagt werden, daß die erfindungsgemäßen Beschichtungsmittel, z.B. Kombinationen von Metallstearaten und Fettsäureamiden als Oberflächenbeschichtungsmittel für mineralische Additive gegenüber dem Stand der Technik folgende wesentliche Vorteile ergeben:
- Die Einarbeitungszeit in einer Knetmaschine wird verkürzt.
- Die Fließfähigkeit gemessen über dem Schmelzindex (MFI) erhöht sich oder ist mindestens so gut wie beim Stand der Technik.
- Die Rheologie des hergestellten Masterbatches (Abhängigkeit der Viskosität von der Schergeschwindigkeit) ist verbessert. Die Fließfähigkeit bei höherer Schergeschwindigkeit erhöht sich stark (geringere Strukturviskosität). Dadurch wird die Verarbeitbarkeit des Masterbatch wesentlich erleichtert (geringerer Widerstand in der Lochplatte der Granuliereinrichtung usw.).

- Die direkte Dispergierung des Füllstoffes in der Polymerschmelze ist erleichtert und ergibt keine Restagglomerate in der Schmelze.
- Die Grenzflächenspannung zwischen der Füllstoffoberfläche und der Polyolefin- oder Polystyrolschmelze wird minimalisiert.

Die aufgeführten Beispiele zeigen zudem deutlich, daß ein Beschichtungsmittel aus einer Kombination von Fettsäuresalzen mit Fettsäureamiden wesentliche technische Vorteile gegenüber der Verwendung der Einzelkomponenten ergibt.

Tabelle 1

Einarbeitungsgeschwindigkeit und Schmelzindex (MFI) von
hochgefüllten Calciumcarbonat I / Terpolymer I - Masterbatches

| Versuchs Nr. | Oberflächenbeschichtungsmittel | $CaCO_3$ Beschichtungstemperatur (°C) | Einarbeitungszeit (sec) | MFI 150°C/10 kg (g/10 min) | Bemerkungen |
|---|---|---|---|---|---|
| | 1. Stand der Technik | | | | |
| 1 | Calciumcarbonat I ohne Beschichtungsmittel | kein 88%iges Masterbatch möglich | | | |
| 2 | 1 % $C_{18}$-Monoester der $H_3PO_4$ zugesetzt als Dispergator | - | 1080 | 10 | BE 904,762 |
| 3 | 1 % $C_{18}$-Monoester der $H_3PO_4$ beschichtet auf Calciumcarbonat I | 100 | 960 | 15 | |
| 4 | 1 % Stearinsäure beschichtet auf Calciumcarbonat I | 90 | 600 | 0,1 | DE-PS 958 830 |
| 5 | 1 % Ca-Stearat " " " | kein 88%iges Masterbatch möglich | | | JP 61 97,363 |
| 6 | 1 % Mg-Stearat " " " | 110 | 780 | 25 | |
| 7 | 1 % Zn-Stearat " " " | 150 | 610 | 37 | |
| 8 | 1 % Zn-/Mg-Stearat 1:1 " " " | 130 | 520 | 39 | JP 78,142,455 |
| 9 | 1 % Stearinsäureamid " " " | 125 | kein 88%iges Masterbatch möglich | | DE-PS 958 830 |

EP 0 355 808 B1

Tabelle 1 (Fortsetzung)

Einarbeitungsgeschwindigkeit und Schmelzindex (MFI) von hochgefüllten Calciumcarbonat I / Terpolymer I-Masterbatches

| Versuchs-Nr. | Oberflächenbeschichtung | $CaCO_3$-Beschichtungstemperatur (°C) | Einarbeitungszeit (sec) | MFI 150°C/10 kg (g/10 min) |
|---|---|---|---|---|
| | **2. Erfindung** | | | |
| | a) Zn-Stearat/Stearamid* 1:1 beschichtet auf Calciumcarbonat I | | | |
| 13 | 0,7 % Beschichtungsmittel | 130 | 470 | 37 |
| 10 | 1,0 % " | 130 | 420 | 39 |
| 14 | 2,0 % " | 130 | 400 | 44 |
| | b) Mg-Stearat/Stearamid 1:1 beschichtet auf Calciumcarbonat I | | | |
| 15 | 0,7 % Beschichtungsmittel | 100 | 455 | 38 |
| 11 | 1,0 % " | 100 | 420 | 36 |
| 16 | 2,0 % " | 100 | 380 | 43 |
| | c) Zn-Stearat/Mg-Stearat/Stearamid 1/3:1/3:1/3 beschichtet auf Calciumcarbonat I | | | |
| 17 | 0,7 % Beschichtungsmittel | 100 | 480 | 43 |
| 12 | 1,0 % " | 100 | 400 | 40 |
| 18 | 2,0 % " | 100 | 390 | 46 |

* Stearamid = Stearinsäureamid

## Tabelle 2

**Schmelzviskosität mit dem Kegel-Platte Viskosimeter von hochgefüllten Calciumcarbonat I / Terpolymer I - Masterbatches bei 190°C**

| Versuch No. | Oberflächenbeschichtungsmittel | Schmelzviskosität bei Schergeschwindigkeit | | | Bemerkungen |
|---|---|---|---|---|---|
| | | $5\ s^{-1}$ Pa.s | $25\ s^{-1}$ Pa.s | $50\ s^{-1}$ Pa.s | |
| | **1. Stand der Technik** | | | | |
| 1 | Calciumcarbonat I unbeschichtet | kein 88%iges Masterbatch möglich | | | |
| 2 | 1 % $C_{18}$-Monoester der $H_3PO_4$ zugesetzt als Dispergator | 900 | 356 | 296 | BE 904,762 |
| 3 | 1 % $C_{18}$-Monoester der $H_3PO_4$ beschichtet auf Calciumcarbonat I | | | | |
| 4 | 1 % Stearinsäure " " | 615 | 317 | 241 | DE-PS 958 830 |
| 5 | 1 % Ca-Stearat " " | kein 88%iges Masterbatch möglich | | | JP 6197,363 |
| 6 | 1 % Mg-Stearat " " | 828 | 363 | 264 | |
| 7 | 1 % Zn-Stearat " " | 557 | 323 | 230 | |
| 8 | 1 % Zn-/Mg-Stearat 1:1 " " | 583 | 303 | 224 | JP 78 142,455 |
| 9 | 1 % Stearinsäureamid " " | kein 88%iges Masterbatch möglich | | | DE-PS 958 830 |

EP 0 355 808 B1

Tabelle 2 (Fortsetzung)

Schmelzviskosität mit dem Kegel-Platte Viskosimeter von hochgefüllten Calciumcarbonat I / Terpolymer I-Masterbatches bei 190°C

| Versuchs-Nr. | Oberflächenbeschichtung | Schmelzviskosität bei Schergeschwindigkeit | | |
|---|---|---|---|---|
| | | $5\ s^{-1}$ Pa.s | $25\ s^{-1}$ Pa.s | $50\ s^{-1}$ Pa.s |
| | 2. Erfindung | | | |
| | a) Zn-Stearat/Stearamid* 1:1 beschichtet auf Calciumcarbonat I | | | |
| 13 | 0,7 % Beschichtungsmittel | 572 | 298 | 207 |
| 10 | 1,0 %        " | 537 | 290 | 193 |
| 14 | 2,0 %        " | 532 | 282 | 178 |
| | b) Mg-Stearat/Stearamid 1:1 beschichtet auf Calciumcarbonat I | | | |
| 15 | 0,7 % Beschichtungsmittel | 552 | 295 | 202 |
| 11 | 1,0 %        " | 448 | 263 | 172 |
| 16 | 2,0 %        " | 442 | 236 | 158 |
| | c) Zn-Stearat/Mg-Stearat/Stearamid 1/3:1/3:1/3 beschichtet auf Calciumcarbont I | | | |
| 17 | 0,7 % Beschichtungsmittel | 538 | 287 | 192 |
| 12 | 1,0 %        " | 424 | 251 | 149 |
| 18 | 2,0 %        " | 404 | 230 | 135 |

\* Stearamid = Stearinsäureamid

EP 0 355 808 B1

## Tabelle 3

Dispergierung von 20 % oberflächenbeschichtetem Calciumcarbonat I mit 80 % HDPE-Granulat
mit einer Dispergierschnecke im Extruder

| Versuchs No. | | Dispergierschnecke | | |
|---|---|---|---|---|
| | | 40 Upm | 20 Upm | |
| | **1. Stand der Technik** | | | |
| 1 | Calciumcarbonat I ohne Beschichtungsmittel | schlecht | schlecht | |
| 2 | 1 % $C_{18}$-Monoester der $H_3PO_4$ zugesetzt als Dispergator | sehr gut | sehr gut | BE 904,762 |
| 3 | 1 %   "      "      "      "   beschichtet auf Calciumcarbonat I | sehr gut | sehr gut | |
| 4 | 1 % Stearinsäure          "      "      " | sehr gut | gut | DE-PS 958 830 |
| 5 | 1 % Ca-Stearat          "      "      " | schlecht | schlecht | JP 6197,363 |
| 6 | 1 % Mg-Stearat          "      "      " | gut | mittel | |
| 7 | 1 % Zn-Stearat          "      "      " | gut | mittel | |
| 8 | 1 % Zn-/Mg-Stearat 1:1          "      "      " | gut | mittel | JP 78 142,455 |
| 9 | 1 % Stearinsäureamid          "      "      " | sehr gut | mittel | DE-PS 958 830 |

**Tabelle 3** (Fortsetzung)

Dispergierung von 20 % oberflächenbeschichtetem Calciumcarbonat I mit 80 % HDPE-Granulat mit einer Dispergierschnecke im Extruder

| Versuchs-Nr. | Oberflächenbeschichtung | Geschwindigkeit der Dispergierschnecke | |
|---|---|---|---|
| | | 40 Upm | 20 Upm |
| | **2. Erfindung** | | |
| | a) Zn-Stearat/:Stearamid* 1:1 beschichtet auf Calciumcarbonat I | | |
| 13 | 0,7 % Beschichtungsmittel | sehr gut | gut |
| 10 | 1,0 % " | sehr gut | sehr gut |
| 14 | 2,0 % " | sehr gut | sehr gut |
| | b) Mg-Stearat/Stearamid 1:1 beschichtet auf Calciumcarbonat I | | |
| 15 | 0,7 % Beschichtungsmittel | sehr gut | sehr gut |
| 11 | 1,0 % " | sehr gut | sehr gut |
| 16 | 2,0 % " | sehr gut | sehr gut |
| | c) Zn-Stearat/Mg Stearat/Stearamid 1/3:1/3:1/3 beschichtet auf Calciumcarbonat I | | |
| 17 | 0,7 % Beschichtungsmittel | sehr gut | sehr gut |
| 12 | 1,0 % " | sehr gut | sehr gut |
| 18 | 2,0 % " | sehr gut | sehr gut |

* Stearamid = Stearinsäureamid

## Patentansprüche

1. Beschichteter Mineralfüllstoff oder beschichtetes mineralisches Flammschutzmittel, **dadurch gekennzeichnet,**

daß er bzw. es aus 97,0 - 99,9 Gew.-% Mineralfüllstoff bzw. Flammschutzmittel und 3,0 - 0,1 Gew.-% Beschichtungsmittel, zusammengesetzt aus einem Gemisch aus 10 - 90 Gew.-% eines Fettsäuresalzes der Erdalkalimetalle und/oder der Schwermetalle, insbesondere des Zinks, und 90 - 10 Gew.-% eines Fettsäureamides, besteht.

2. Beschichteter Mineralfüllstoff oder beschichtetes mineralisches Flammschutzmittel nach Anspruch 1,
dadurch gekennzeichnet,
daß als Fettsäuresalze der Erdalkalimetalle Ca- und/oder Mg-Salze verwendet werden.

3. Beschichteter Mineralfüllstoff oder beschichtetes mineralisches Flammschutzmittel nach Anspruch 1 und 2,
dadurch gekennzeichnet,
daß als Fettsäuresalze Mg- und/oder Zinksalze verwendet werden.

4. Beschichteter Mineralfüllstoff oder beschichtetes mineralisches Flammschutzmittel nach Anspruch 1 und 2,
dadurch gekennzeichnet,
daß als Fettsäuresalze Ca- und/oder Zinksalze verwendet werden.

5. Beschichteter Mineralfüllstoffe oder beschichtetes mineralisches Flammschutzmittel nach einem oder mehreren der vorhergehenden Ansprüche,
dadurch gekennzeichnet,
daß die Fettsäure des Fettsäuresalzes gesättigt oder ungesättigt ist und 12 bis 18 C-Atome besitzt.

6. Beschichteter Mineralfüllstoff oder beschichtetes mineralisches Flammschutzmittel nach einem oder mehreren der vorhergehenden Ansprüche,
dadurch gekennzeichnet,
daß ein Salz der Stearinsäure und/oder ein Salz der Palmitinsäure verwendet wird.

7. Beschichteter Mineralfüllstoff oder beschichtetes mineralisches Flammschutzmittel nach einem oder mehreren der vorhergehenden Ansprüche,
dadurch gekennzeichnet,
daß als Fettsäureamid Stearinsäureamid und/oder Ölsäureamid und/oder Erucasäureamid und/oder Behensäureamid verwendet werden.

8. Beschichteter Mineralfüllstoff oder beschichtetes mineralisches Flammschutzmittel nach einem oder mehreren der vorhergehenden Ansprüche,
dadurch gekennzeichnet,
daß er bzw. es aus
97,5 - 99,5 Gew.% Mineralfüllstoffe bzw. Flammschutzmittel und 2,5 - 0,5 Gew.-% Beschichtungsmittel, bevorzugt aus
98,0 - 99,0 Gew.-% Mineralfüllstoff bzw. Flammschutzmittel und 2,0 - 1,0 Gew.-% Beschichtungsmittel, bevorzugter aus
98,3 - 98,7 Gew.-% Mineralfüllstoff bzw. Flammschutzmittei und 1,7 - 1,3 Gew.-% Beschichtungsmittel und besonders bevorzugt aus
99 Gew.-% Mineralfüllstoff bzw. Flammschutzmittel und
1 Gew.-% Beschichtungsmittel oder aus
99,5 Gew.-% Mineralfüllstoff bzw. Flammschutzmittel und
0,5 Gew.-% Beschichtungsmittel oder aus
99,7 Gew.-% Mineralfüllstoff bzw. Flammschutzmittel und
0,3 Gew.-% Beschichtungsmittel besteht.

9. Beschichteter Mineralfüllstoff oder beschichtetes mineralisches Flammschutzmittel nach einem oder mehreren der vorhergehenden Ansprüche,
dadurch gekennzeichnet,
daß das Beschichtungsmittel aus 10 - 70 Gew.-% eines Fettsäuresalzes und 90 - 30 Gew.-% eines Fettsäureamides besteht.

**10.** Beschichteter Mineralfüllstoff oder beschichtetes mineralisches Flammschutzmittei nach einem oder mehreren der vorhergehenden Ansprüche,
dadurch gekennzeichnet,
daß das Beschichtungsmittel aus 20 - 60 Gew.-% eines Fettsäuresaizes und 80 - 40 Gew.-% eines Fettsäureamides, bevorzugt aus
30 - 50 Gew.-% eines Fettsäuresalzes und 70 - 50 Gew.-% eines Fettsäureamides, bevorzugter aus
65 Gew.-% eines Fettsäuresalzes und 35 Gew.-% eines Fettsäureamides und besonders bevorzugt aus
60 Gew.-% eines Fettsäuresalzes und 40 Gew.-% eines Fettsäureamides oder aus
55 Gew.-% eines Fettsäuresalzes und 45 Gew.-% eines Fettsäureamides oder aus
50 Gew.-% eines Fettsäuresalzes und 50 Gew.-% eines Fettsäureamides besteht.

**11.** Beschichteter Mineralfüllstoff oder beschichtetes mineralisches Flammschutzmittel nach einem oder mehreren der vorhergehenden Ansprüche,
dadurch gekennzeichnet,
daß das Beschichtungsmittel aus Mg-Stearat und Stearinsäureamid und/oder Erucasäureamid besteht.

**12.** Beschichteter Mineralfüllstoff oder beschichtetes mineralisches Flammschutzmittel nach einem oder mehreren der vorhergehenden Ansprüche,
dadurch gekennzeichnet,
daß das Beschichtungsmittel aus 50 Gew.% Mg-Stearat und 50 Gew.% Stearinsäureamid und/oder Erucasäureamid besteht.

**13.** Beschichteter Mineralfüllstoff oder beschichtetes mineralisches Flammschutzmittel nach einem oder mehreren der vorhergehenden Ansprüche,
dadurch gekennzeichnet,
daß das Beschichtungsmittel aus Mg-Stearat, Zn-Stearat und Stearinsäureamid oder Erucasäureamid besteht.

**14.** Beschichteter Mineralfüllstoff oder beschichtetes mineralisches Flammschutzmittel nach einem oder mehreren der vorhergehenden Ansprüche,
dadurch gekennzeichnet,
daß das Beschichtungsmittel aus Mg-Stearat, Zn-Stearat und Stearinsäureamid oder Erucasäureamid im Gewichtsverhältnis 1:1:1 besteht.

**15.** Beschichteter Mineralfüllstoffe oder beschichtetes mineraiisches Flammschutzmittel nach einem oder mehreren der vorhergehenden Ansprüche,
dadurch gekennzeichnet,
daß der Mineralfüllstoffe ein Calciumcarbonat und/oder Calciumsulfat und/oder Talk und/oder Glimmer und/oder Wollastonit ist.

**16.** Beschichteter Mineralfüllstoff oder beschichtetes mineralisches Flammschutzmittel nach einem oder mehreren der vorhergehenden Ansprüche,
dadurch gekennzeichnet,
daß das mineralische Flammschutzmittel ein Aluminiumtrihydrat und/oder Dolomit und/oder Magnesiumcarbonat und/oder teilhydratisiertes Magnesiumcarbonat (Huntit) und/oder Magnesiumhydroxid ist.

**17.** Verwendung des beschichteten Mineralfüllstoffs nach einem oder mehreren der Ansprüche 1 - 15 in unpolaren Polymeren.

**18.** Verwendung des beschichteten Mineralfüllstoffs nach einem oder mehreren der Ansprüche 1 - 15 in Polyolefinen, insbesondere in Polyethylen (PE) und/oder Polypropylen (PP) und/oder ihren Copolymeren.

**19.** Verwendung des beschichteten mineralischen Flammschutzmittels nach einem oder mehreren der Ansprüche 1 - 16 in Polyolefinen, insbesondere in Polyethylen (PE) und/oder Polypropylen (PP) und/oder in ihren Copolymeren.

**20.** Verwendung des beschichteten mineralischen Flammschutzmittels nach einem oder mehreren der Ansprüche 1 - 16 in Polystyrol.

**Claims**

**1.** Coated mineral filler or coated mineral flameproofing agent,
characterized in that it consists of 97.0 - 99.9 % by weight mineral filler or flameproofing agent and 3.0 - 0.1 % by weight coating agent made up of a mixture of 10 - 90 % by weight of a fatty acid salt of the alkaline earth metals and/or of the heavy metals, in particular zinc, and 90 - 10 % by weight of a fatty acid amide.

**2.** Coated mineral filler or coated mineral flameproofing agent according to claim 1,
characterized in that as fatty acid salts of the alkaline earth metals Ca and/or Mg salts are used.

**3.** Coated mineral filler or coated mineral flameproofing agent according to claim 1 and 2,
characterized in that as fatty acid salts Mg and/or zinc salts are used.

**4.** Coated mineral filler or coated mineral flameproofing agent according to claim 1 and 2,
characterized in that as fatty acid salts Ca and/or zinc salts are used.

**5.** Coated mineral filler or coated mineral flameproofing agent according to one or more of the preceding claims,
characterized in that the fatty acid of the fatty acid salt is saturated or unsaturated and has 12 to 18 C atoms.

**6.** Coated mineral filler or coated mineral flameproofing agent according to one or more of the preceding claims,
characterized in that a salt of stearic acid and/or a salt of palmitic acid is used.

**7.** Coated mineral filler or coated mineral flameproofing agent according to one or more of the preceding claims,
characterized in that as fatty acid amide stearic acid amide and/or oleic acid amide and/or erucic acid amide and/or behenic acid amide are used.

**8.** Coated mineral filler or coated mineral flameproofing agent according to one or more of the preceding claims,
characterized in that it consists of 97.5 - 99.5 % by weight mineral filler or flameproofing agent and 2.5 - 0.5 % by weight coating agent, preferably of
98.0 - 99.0 % by weight mineral filler or flameproofing agent and 2.0 - 1.0 % by weight coating agent, more preferably of
98.3 - 98.7 % by weight mineral filler or flameproofing agent and 1.7 - 1.3 % by weight coating agent, in particular preferably of
99 % by weight mineral filler or flameproofing agent and 1 % by weight coating agent, or of
99.5 % by weight mineral filler or flameproofing agent and 0.5 % by weight coating agent or of
99.7 % by weight mineral filler or flameproofing agent and 0.3 % by weight coating agent.

**9.** Coated mineral filler or coated mineral flameproofing agent according to one or more of the preceding claims,
characterized in that the coating agent consists of 10 - 70 % by weight of a fatty acid salt and 90 - 30 % by weight of a fatty acid amide.

**10.** Coated mineral filler or coated mineral flameproofing agent according to one or more of the preceding claims,
characterized in that the coating agent consists of 20 - 60 % by weight of a fatty acid salt and 80 - 40 % by weight of a fatty acid amide, preferably of
30 - 50 % by weight of a fatty acid salt and 70 - 50 % by weight of a fatty acid amide, more preferably of
65 % by weight of a fatty acid salt and 35 % by weight of a fatty acid amide, and in particular

16

preferably of
60 % by weight of a fatty acid salt and 40 % by weight of a fatty acid amide, or of
55 % by weight of a fatty acid salt and 45 % by weight of a fatty acid amide, or of
50 % by weight of a fatty acid salt and 50 % by weight of a fatty acid amide.

11. Coated mineral filler or coated mineral flameproofing agent according to one or more of the preceding claims,
characterized in that the coating agent consists of Mg stearate and stearic acid amide and/or erucic acid amide.

12. Coated mineral filler or coated mineral flameproofing agent according to one or more of the preceding claims,
characterized in that the coating agent consists of 50 % by weight Mg stearate and 50 % by weight stearic acid amide and/or erucic acid amide.

13. Coated mineral filler or coated mineral flameproofing agent according to one or more of the preceding claims,
characterized in that the coating agent consists of Mg stearate, Zn stearate and stearic acid amide or erucic acid amide.

14. Coated mineral filler or coated mineral flameproofing agent according to one or more of the preceding claims,
characterized in that the coating agent consists of Mg stearate, Zn stearate and stearic acid amide or erucic acid amide in the weight ratio 1:1:1.

15. Coated mineral filler or coated mineral flameproofing agent according to one or more of the preceding claims,
characterized in that the mineral filler is calcium carbonate and/or calcium sulfate and/or talc and/or mica and/or wollastonite.

16. Coated mineral filler or coated mineral flameproofing agent according to one or more of the preceding claims,
characterized in that the mineral flameproofing agent is aluminium trihydrate and/or dolomite and/or magnesium carbonate and/or partially hydrated magnesium carbonate (huntite) and/or magnesium hydroxide.

17. Use of the coated mineral filler according to one or more of claims 1 to 15 in nonpolar polymers.

18. Use of the coated mineral filler according to one or more of claims 1 to 15 in polyolefins, in particular in polyethylene (PE) and/or polypropylene (PP) and/or copolymers thereof.

19. Use of the coated mineral flameproofing agent according to one or more of claims 1 to 16 in polyolefins, in particular in
polyethylene (PE) and/or polypropylene (PP) and/or in their copolymers.

20. Use of the coated mineral flameproofing agent according to one or more of claims 1 - 16 in polystyrene.

**Revendications**

1. Charge minérale enrobée ou agent ignifuge minéral enrobé, caractérisé en ce qu'il est constitué de 97,0-99,9 % en poids de charge ou agent ignifuge minéral et de 3,0-0,1 % en poids d'agent d'enrobage constitué d'un mélange de 10-90 % en poids d'un sel d'acide gras de métaux alcalino-terreux et/ou de métaux lourds, en particulier du zinc, et de 90-10 % en poids d'un amide d'acide gras.

2. Charge minérale enrobée ou agent ignifuge minéral enrobé suivant la revendication 1, caractérisé en ce que des sels de Ca et/ou Mg sont utilisés comme sels d'acide gras de métaux alcalino-terreux.

**3.** Charge minérale enrobée ou agent ignifuge minéral enrobé suivant l'une des revendications 1 et 2, caractérisé en ce que des sels de Mg et/ou de zinc sont utilisés comme sels d'acide gras.

**4.** Charge minérale enrobée ou agent ignifuge minéral enrobé suivant l'une des revendications 1 et 2, caractérisé en ce que des sels de Ca et/ou de zinc sont utilisés comme sels d'acide gras.

**5.** Charge minérale enrobée ou agent ignifuge minéral enrobé suivant une ou plusieurs des revendications précédentes, caractérisé en ce que l'acide gras du sel d'acide gras est saturé ou insaturé et contient 12 à 18 atomes de C.

**6.** Charge minérale enrobée ou agent ignifuge minéral enrobé suivant une ou plusieurs des revendications précédentes, caractérisé en ce qu'un sel de l'acide stéarique et/ou un sel de l'acide palmitique est ou sont utilisé(s).

**7.** Charge minérale enrobée ou agent ignifuge minéral enrobé suivant une ou plusieurs des revendications précédentes, caractérisé en ce qu'un amide de l'acide stéarique et/ou un amide de l'acide oléique et/ou un amide de l'acide érucique et/ou un amide de l'acide béhénique est ou sont utilisé(s) comme amide d'acide gras.

**8.** Charge minérale enrobée ou agent ignifuge minéral enrobé suivant une ou plusieurs des revendications précédentes, caractérisé en ce qu'il est constitué de 97,5-99,5 % en poids de charge ou agent ignifuge minéral et de 2,5-0,5 % en poids d'agent d'enrobage, de préférence de
98,0-99,0 % en poids de charge ou agent ignifuge minéral et de 2,0-1,0 % en poids d'agent d'enrobage, plus préférentiellement, de
98,3-98,7 % en poids de charge ou agent ignifuge minéral et de 1,7-1,3 % en poids d'agent d'enrobage, en particulier de préférence de
99 % en poids de charge ou agent ignifuge minéral et de 1 % en poids d'agent d'enrobage, ou de
99,5 % en poids de charge ou agent ignifuge minéral et de 0,5 % en poids d'agent d'enrobage, ou de
99,7 % en poids de charge ou agent ignifuge minéral et de 0,3 % en poids d'agent d'enrobage.

**9.** Charge minérale enrobée ou agent ignifuge minéral enrobé suivant une ou plusieurs des revendications précédentes, caractérisé en ce que l'agent d'enrobage est constitué de 10-70 % en poids d'un sel d'acide gras et de 90-30 % en poids d'un amide d'acide gras.

**10.** Charge minérale enrobée ou agent ignifuge minéral enrobé suivant une ou plusieurs des revendications précédentes, caractérisé en ce que l'agent d'enrobage est constitué de 20-60 % en poids d'un sel d'acide gras et de 80-40 % en poids d'un amide d'acide gras, de préférence de
30-50 % en poids d'un sel d'acide gras et de 70-50 % en poids d'un amide d'acide gras, plus préférentiellement de
65 % en poids d'un sel d'acide gras et de 35 % en poids d'un amide d'acide gras, et en particulier de préférence de
60 % en poids d'un sel d'acide gras et de 40 % en poids d'un amide d'acide gras, ou de
55 % en poids d'un sel d'acide gras et de 45 % en poids d'un amide d'acide gras, ou de
50 % en poids d'un sel d'acide gras et de 50 % en poids d'un amide d'acide gras.

**11.** Charge minérale enrobée ou agent ignifuge minéral enrobé suivant une ou plusieurs des revendications précédentes, caractérisé en ce que l'agent d'enrobage est constitué de stéarate de Mg et d'un amide de l'acide stéarique et/ou un amide de l'acide érucique.

**12.** Charge minérale enrobée ou agent ignifuge minéral enrobé suivant une ou plusieurs des revendications précédentes, caractérisé en ce que l'agent d'enrobage est constitué de 50 % en poids de stéarate de Mg et de 50 % en poids d'un amide de l'acide stéarique et/ou un amide de l'acide érucique.

**13.** Charge minérale enrobée ou agent ignifuge minéral enrobé suivant une ou plusieurs des revendications précédentes, caractérisé en ce que l'agent d'enrobage est constitué de stéarate de Mg, de stéarate de Zn et d'un amide de l'acide stéarique ou un amide de l'acide érucique.

18

**14.** Charge minérale enrobée ou agent ignifuge minéral enrobé suivant une ou plusieurs des revendications précédentes, caractérisé en ce que l'agent d'enrobage est constitué de stéarate de Mg, de stéarate de Zn et d'un amide de l'acide stéarique ou un amide de l'acide érucique dans un rapport pondéral 1:1:1.

**15.** Charge minérale enrobée ou agent ignifuge minéral enrobé suivant une ou plusieurs des revendications précédentes, caractérisé en ce que la charge minérale est du carbonate de calcium et/ou du sulfate de calcium et/ou du talc et/ou du mica et/ou de la wollastonite.

**16.** Charge minérale enrobée ou agent ignifuge minéral enrobé suivant une ou plusieurs des revendications précédentes, caractérisé en ce que l'agent ignifuge minéral est un trihydrate d'aluminium et/ou une dolomite et/ou un carbonate de magnésium et/ou un carbonate de magnésium partiellement hydraté (huntite) et/ou un hydroxyde de magnésium.

**17.** Utilisation de la charge minérale enrobée suivant une ou plusieurs des revendications 1 à 15 dans des polymères non polaires.

**18.** Utilisation de la charge minérale enrobée suivant une ou plusieurs des revendications 1 à 15 dans des polyoléfines, en particulier dans du polyéthylène (PE) et/ou du polypropylène (PP) et/ou des copolymères de ceux-ci.

**19.** Utilisation de l'agent ignifuge minéral enrobé suivant une ou plusieurs des revendications 1 à 16 dans des polyoléfines, en particulier dans du polyéthylène (PE) et/ou du polypropylène (PP) et/ou dans leurs copolymères.

**20.** Utilisation de l'agent ignifuge minéral enrobé suivant une ou plusieurs des revendications 1-16 dans du polystyrène.